Europäisches Patentamt

European Patent Office

Office européen des brevets

(11) Veröffentlichungsnummer: **0 334 053**
**A2**

## (12) EUROPÄISCHE PATENTANMELDUNG

(21) Anmeldenummer: 89103364.9

(22) Anmeldetag: 25.02.89

(51) Int. Cl.4: **G01N 29/04**

(30) Priorität: 22.03.88 DE 3809542

(43) Veröffentlichungstag der Anmeldung:
27.09.89 Patentblatt 89/39

(84) Benannte Vertragsstaaten:
**DE FR GB NL**

(71) Anmelder: **Nukem GmbH**
**Rodenbacher Chaussee 6 Postfach 11 00 80**
**D-6450 Hanau 11(DE)**

(72) Erfinder: **Maroszek, Manfred**
**Friedrichstrasse 38**
**D-6831 Plankstadt(DE)**
Erfinder: **Müller, Horst, Dipl.-Ing.**
**Am Anger 19**
**D-6706 Wachenheim(DE)**

(54) **Vorrichtung zur Schweissnahtprüfung an Rohren.**

(57) Zur Schweißnahtprüfung an Rohren unter beengten räumlichen Bedingungen mittels Ultraschall wird eine Vorrichtung eingesetzt, die aus einer Wanne für das Ankopplungsmedium besteht, an deren Montagewand ein Führungselement befestigt ist, die eine Befestigungseinrichtung für das Prüfobjekt aufweist. Um das Führungselement ist ein Rad geführt, an dem eine Halterung für die Prüfköpfe befestigt ist. Dieses Rad wird über ein Hauptantriebsrad angetrieben, das axial verschiebbar ist, ebenso wie die Halterung für die Prüfköpfe.

EP 0 334 053 A2

# Vorrichtung zur Schweißnahtprüfung an Rohren

Gegenstand der Erfindung ist eine Vorrichtung zur Schweißnahtprüfung an Rohren, ein oder mehrere Prüfsysteme enthaltend, insbesondere zur Prüfung von Schweißspaltfehlern automatengeschweißter Rohrverbindungen an Rohrleitungssystemen mittels Ultraschall.

Zur Qualitätssicherung von geschweißten Rohrverbindungen werden an sich bekannte zerstörungsfreie Prüfverfahren angewendet. Besondere Probleme ergeben sich jedoch bei der praktischen Durchführung solcher Prüfverfahren bei Rohrleitungssystemen großer Länge und mit relativ geringen Rohrdurchmessern. Kennzeichnend für viele derartige Systeme sind räumliche Beengtheit, kombinierter horizontaler, vertikaler und schräger Rohrverlauf, sowie eine Vielzahl von Schweißverbindungen. Beispiele für derartige Rohrsysteme sind Anlagen der chemischen und pharmazeutischen Verfahrenstechnik, Präzisions-Reinstgasversorgungssysteme für die Mikroprozessoren-Fertigung sowie kerntechnische Anwendungen.

Die Schweißnahtprüfungen an oft mehreren hundert Schweißnähten erolgen vor der Erstinbetriebnahme und in vielen Fällen später als Wiederholungsprüfungen, fallweise bei laufendem mediengeführtem Betrieb. Die häufig unter räumlich erschwerten Bedingungen bei oft eng benachbarter Rohrleitungsführung durchgeführten Prüfungen z.B. auf Schweißspaltfehler, verursacht durch mangelhafte Durchschweißung oder durch seitlichen Schweißnahtversatz, sind wegen der äußeren Umstände insgesamt umständlich und zeitaufwendig, so daß bei nur geringem Prüfdurchsatz hohe Kosten entstehen. Fallweise, z.B. bei Prüfverfahren mit ionisierender Strahlung, ergeben sich zusätzlich schutztechnische Probleme.

Der vorliegenden Erfindung lag daher die Aufgabe zu Grunde, eine Vorrichtung zur Schweißnahtprüfung an Rohren, ein oder mehrere Prüfsysteme enthaltend, insbesondere zur Prüfung von Schweißspaltfehlern automatengeschweißter Rohrverbindungen an Rohrleitungssystemen mittels Ultraschall, zu schaffen, die kompakt aufgebaut, flexibel auch bei Rohrleitungsführungen unter beengten räumlichen Verhältnissen bei horizontaler, vertikaler und schräger Rohrposition einsetzbar und leicht handhabbar ist, und die bei geringen Vorrichtungs- und Prüfkosten einen hohen wirtschaftlichen Prüfdurchsatz ermöglicht.

Die Aufgabe wurde erfindungsgemäß dadurch gelöst, daß an einer Montagewand einer mit Deckel und mit Abdichtungen versehenen Wanne, ein im wesentlichen zylinderförmiges Führungselement montiert ist, welches eine Befestigungseinrichtung für das Prüfobjekt aufweist. daß um das mit einer entsprechend geformten Ausnehmung zur lateralen Aufnahme des Prüfobjektes versehene Führungselement ein Rad mit einer entsprechenden Ausnehmung drehbar geführt ist, daß weiterhin am Rad eine ebenfalls zur lateralen Prüfobjektaufnahme geeignete Halterung für ein oder mehrere justierbare Prüfköpfe befestigt ist, daß das Rad zum Antrieb mit einem Hauptantriebsrad verbunden ist, daß das Hauptantriebsrad über eine entsprechend gelagerte axial verschiebbare Achse mit einem Antriebselement gekoppelt ist, daß ferner auf der Achse ein Verstellelement zur axialen Verstellung der Halterung angeordnet ist, und daß zwei gegenüberliegende Wände der Wanne mit entsprechenden Ausnehmungen für das Prüfobjekt versehen sind.

Besonders günstig ist es, wenn aus der dem Prüfobjekt zugewandten Fläche der Halterung, aus den entsprechenden Flächen des Führungselements und aus einer Begrenzungswand eine abdeckbare Kammer für Ankopplungsmedien gebildet ist, und daß diese Kammer mit einer Koppelmittelzuführung über einen im Führungselement enthaltenen Kanal in Verbindung steht.

Weiterhin ist es vorteilhaft, wenn das Führungselement außerhalb der Wanne an der Montagewand befestigt ist.

Ebenfalls ist es günstig, wenn die Befestigungseinrichtung am Führungselement als Adapter für Prüfobjekte mit unterschiedlichen Durchmessern bzw. Geometrien ausgebildet ist, wobei der Adapter aus einer konischen Ausnehmung (33) im Führungselement besteht, in die lösbare Backen eingreifen, die über eine geschlitzte Druckscheibe mittels geschlitzter Spannmutter spannbar sind.

Eine weitere vorteilhafte Ausgestaltung besteht darin, daß das Rad mit dem Hauptantriebsrad über zwei Zwischenräder, deren Achsabstand den Umlauf des Rades gewährleistet, verbunden ist.

Ebenso ist es vorteilhaft, wenn die zwei Zwischenräder, welche mit einem den Umfang des Rades umfassenden Bund versehen sind, das Verstellelement bilden.

Vorzugsweise sind die Achsen der Zwischenräder am Verstellelement befestigt.

Schließlich ist es von Vorteil, wenn der bzw. die Prüfköpfe zu einem Modul zusammengefaßt sind, der direkt am Rad auswechselbar befestigt ist, wobei der Modul an Modul-Führungen, die sich am Führungselement befinden, geführt ist.

In manchen Fällen kann es günstig sein, wenn den Prüfköpfen justierbare akustische Reflektoren zugeordnet sind.

Vorzugsweise bilden der Modul und das Rad eine auswechselbare Einheit, wobei es günstig ist, wenn der Modul in das Rad integriert ist.

Vorteilhaft ist es ferner, wenn das Rad, die zwei Zwischenräder und das Hauptantriebsrad als Zahnräder ausgebildet sind.

An Hand der schematischen Figuren I, II und III soll die vorliegende Erfindung beispielhaft näher erläutert werden.

An einer Montagewand (1), die Bestandteil einer Wanne (4) ist, ist, vorzugsweise außerhalb der Wanne, ein Führungselement (11) fest oder lösbar befestigt.

Das Führungselement weist im wesentlichen zylinderförmige Konturen auf und ist mit einer Ausnehmung (13) versehen, welche die laterale Aufnahme einer Rohrleitung (14) mit Schweißnahtverbindungen (20) gestattet. Das Führungselement enthält eine Befestigungseinrichtung (12) zur Fixierung der Vorrichtung and der Rohrleitung. Die Befestigungseinrichtung (12) kann aus einer Andruckplatte bestehen. Vorzugsweise ist die Befestigungseinrichtung (12) am Führungselement (11) als Adapter für Prüfobjekte (14) mit unterschiedlichen Durchmessern bzw. Geometrien ausgebildet, wobei der Adapter aus einer konischen Ausnehmung (33) im Führungselement (11) besteht, in die lösbare Backen (34) eingreifen, die über eine geschlitzte Druckscheibe (35) mittels geschlitzter Spannmutter (36) spannbar sind. Um das Führungselement (11) ist ein Rad (15) drehbar geführt. Das Rad (15) enthält ebenfalls eine schlitzförmige Ausnehmung (16) mit entsprechender Funktion wie die Ausnehmung (13) am Führungselement (11). Am Rad (15) ist eine Halterung (17) befestigt. Diese kann z.B. halbschalig oder aus separaten Teilhalterungen aufgebaut sein, so daß, analog den Funktionen der Ausnehmungen (13,16) die laterale Aufnahme der Rohrleitung (14) möglich ist. An der Halterung (17) sind ein oder mehrere justierbare Prüfköpfe (18) angeordnet, fallweise ferner jeweils zugeordnete justierbare akustische Reflektoren (19). Die Prüfköpfe (18) dienen zur Fehlerprüfung an der Schweißnaht (20). Die Anordnung der Prüfköpfe und der zugeordneten Reflektoren ist so gewählt, daß bei einer Umdrehung des Rades (15) an die Schweißnaht (20) beide Schweißnahtflanken geprüft werden können. Die Anzahl der Prüfköpfe bzw. die Auslegung des Prüfsystems ist der jeweiligen Prüfaufgabe angepaßt.

Der Grad der Umdrehung bzw. die mögliche Drehrichtung der Halterung (17) kann z.B. durch Endschalter vorgegeben bzw. gesteuert werden. Es ist aus rationellen und Anpaßgründen möglich, wenn die Prüfköpfe (18) und gegebenenfalls die Reflektoren (19) zu einem Modul (37) zusammengefaßt sind, der direkt am Rad (15) auswechselbar befestigt ist, wobei der Modul (37) an Modul-Führungen (38), die sich am Führungselement (11) befinden, geführt ist. Der Modul (37) und das Rad (15) können eine auswechselbare Einheit bilden.

Das Rad (15) ist zum Antrieb mit einem Hauptantriebsrad (22) verbunden. Günstig ist es, wenn das Rad (15) mit dem Hauptantriebsrad (22) über zwei Zwischenräder (21) verbunden ist, deren Achsabstand den Umlauf des Rades (15) gewährleistet. Neben Friktionsantrieb kann vorteilhafterweise auch Zahnradantrieb erfolgen, wobei die Räder (15,21,22) als Zahnräder ausgebildet sind. Das Hauptantriebsrad (22) wird über eine entsprechend gelagerte Achse (23) von einem Antriebselement (24), das beispielsweise ein Motor oder ein manueller Antrieb sein kann, angetrieben. Auf der in axialer Richtung zusammen mit den Rädern gemeinsam verschiebbaren Achse (23) befindet sich ein mittels Stellring (25) arretierbares oder mit ihr fest verbundenes Verstellelement (26). Diese überträgt die Axialbewegung letztlich auf die Prüfköpfe, so daß die Positionierung hinsichtlich Schweißnaht bzw. Prüfspur ermöglicht wird. Z.B. kann das Verstellelement (26) durch Eingreifen in eine an der Halterung (17) befindliche umlaufende Nut (27) die Axialbewegung übertragen. Es ist aber auch möglich, daß die Zwischenräder (21), welche mit einem den Umfang des Rades (15) umfassenden Bund versehen sind, die Axialbewegung übertragen.

In diesem Fall muß das Verstellelement (26) nicht in die Halterung (17) eingreifen. Die Achsen der beiden Zwischenräder (21) sind am Verstellelement (26) befestigt.

Das Führungselement (11) kann innerhalb oder außerhalb der Wanne (4) an der Montagewand (1) befestigt sein.

Die Wanne (4) enthält ein geeignetes Ankoppelmedium (8), z.B. Wasser, zur Ankopplung der Prüfköpfe (18) an das Prüfobjekt. Das Ankoppelmedium (8) kann über Zu-und Abläufe (5,6) zu- bzw. abgeführt werden. Zwei gegenüberliegende Wände (eine davon ist die Montagewand (1)) der Wanne haben entsprechende Ausnehmungen (28) zur lateralen Rohrleitungsaufnahme. Die Ausnehmungen (28) sowie auch andere Wanddurchführungen können mit Dichtungen (7), z.B. aus Schaumstoff oder aus anderem geeigneten Materialien, abgedichtet werden. Absolute Dichtheit ist nicht unbedingt erforderlich, da geringfügige Leckagen leicht abgewischt werden können. Die Wanne (4) kann mit einem Deckel (2) verschlossen werden, wobei das Vorsehen einer Deckeldichtung (3) zweckmäßig ist.

Damit der Koppelmittelzuführungs... nur zu verhältnismäßig geringen Leckagen führt und sich an der eigentlichen Kopplungsstrecke Prüfkopf-Prüfobjekt ein günstiges Koppelmittelverhalten hinsichtlich der Prüfung einstellt, ist es vorteilhaft, wenn aus der dem Prüfobjekt (14) zugewandten Fläche der Halterung (17), aus den ensprechenden Flächen des Führungselements (11) und aus einer Begrenzungswand (30) eine abdeckbare Kammer (31) für das Ankopplungsmedium (8) gebildet ist, und daß die Kammer (31) mit der Koppelmittelzuführung (29) über einen im Führungselement (11) enthaltenen Kanal (30) in Verbindung steht.

Eine entsprechende Kammer erbigt sich durch sinngemäße Ausformung der äußeren Kontur des Moduls (37).

Die erfindungsgemäße Vorrichtung ist sehr kompakt aufgebaut und flexibel einsetzbar. Je nach Ausgestaltung und Anwendung kann die Länge der Vorrichtung, parallel zur Rohrleitung gemessen, z.B. 80 bis 200 mm betragen, wenn der Rohrdurchmesser bis ca. 100 mm beträgt.

Als Konstruktionsmaterial sind u.a. rostfreier Stahl, Aluminiumwerkstoffe und Kunststoffe geeignet.

Abmessungen, Material und Gestaltung der Vorrichtung ermöglichen den problemlosen, sicheren und zügigen Einsatz bei der Schweißnahtprüfung an kompliziert verlegter Rohrleitungssystemen unter räumlich beengten Verhältnissen und bei horizontalem, vertikalem und schrägem Rohrverlauf.

Im Zusammenhang mit den besonderen Ausgestaltungen ist es möglich, auch Schweißnähte zu prüfen, die sich innerhalb des Rohrleitungssystems in der Nähe von Ventilen, Armaturen und dgl. befinden. Durch sehr geringe Rüstzeiten, einfache Handhabung und durch die Möglichkeit der Vorjustierung ist eine rationelle Prüfabfolge möglich.

Schließlich sei darauf, hingewiesen, daß bei Prüfungen an Rohrleitungsabschnitten mit vertikalem oder schrägem Verlauf die der Montagewand (1) gegenüberliegende Wand der Wanne (4) als Deckel ausgebildet sein kann. Ebenfalls liegt es im Rahmen der Erfindung, die Ausbildung der Wanne (4) den Gegebenheiten anzupassen, sowie die Backen (34) bzw. den Adapter insgesamt so zu gestalten, daß auch Abweichungen von der Rohrleitungsgeometrie, z.B. durch in Rohrleitungssysteme eingebaute Ventile und dgl., in deren Nähe Rohrschweißnähte liegen, berücksichtigt werden können. Dadurch kann die erfindungsgemäße Vorrichtung auch an derartigen Rohrleitungsgeometrie-Abweichungen fixiert werden.

Durch die Integration des Moduls (37) mit seinen Prüfköpfen (18) und gegebenenfalls mit zugeordneten akustischen Reflektoren (19) in das Rad (15) kann die Prüfeinheit so miniaturisiert werden, daß auch Schweißnähte mit nur sehr kurzen benachbarten Rohrleitungsansätzen mittels der erfindungsgemäßen Vorrichtung prüfbar sind.

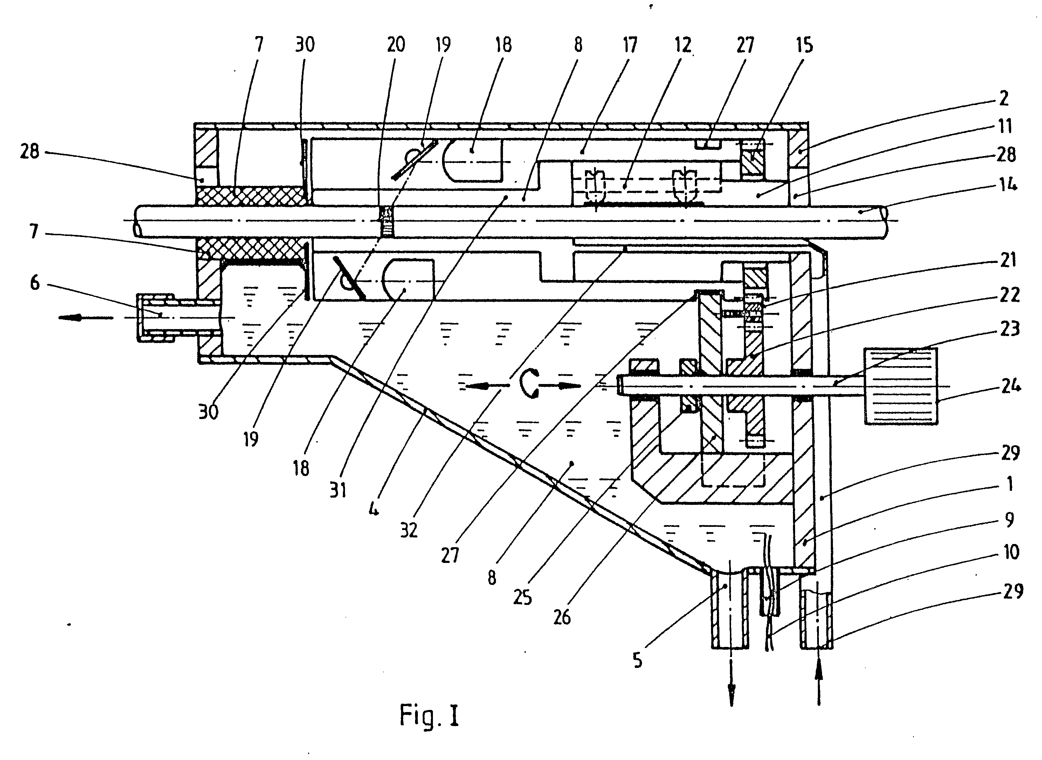

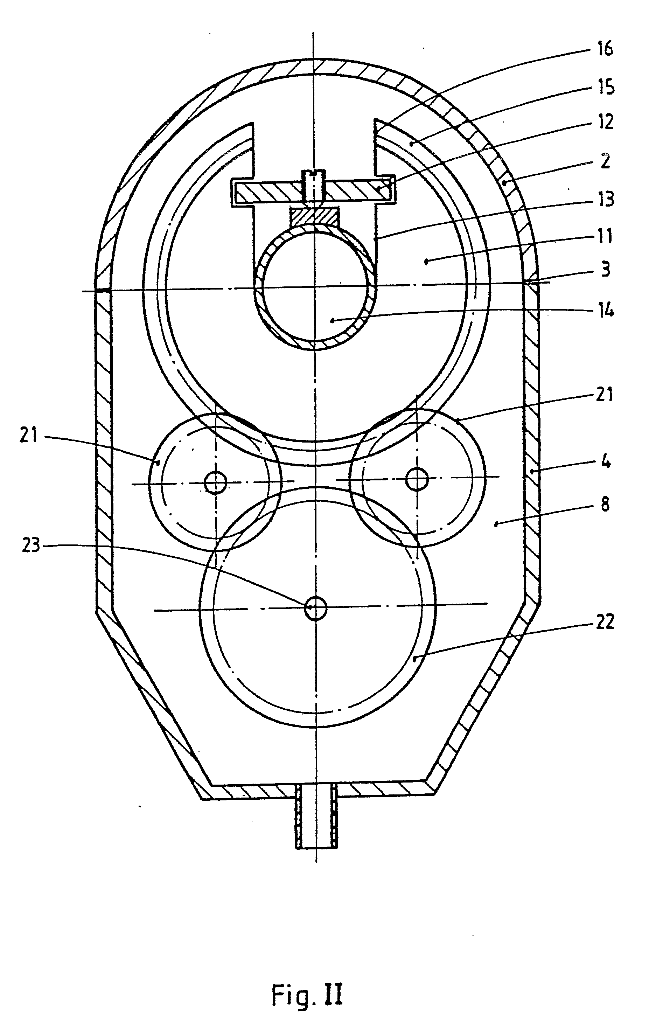

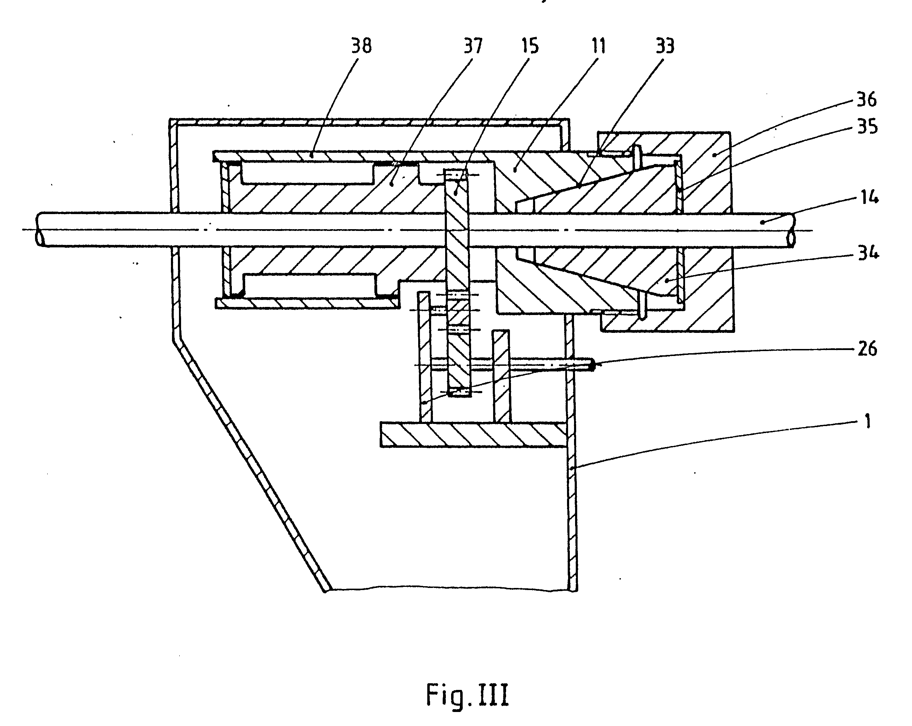

## Ansprüche

1. Vorrichtung zur Schweißnahtprüfung an Rohren, ein oder mehrere Prüfsysteme enthaltend, insbesondere zur Prüfung von Schweißspaltfehlern automatengeschweißter Rohrverbindungen an Rohrleitungssystemen mittels Ultraschall, dadurch gekennzeichnet,
daß an einer Montagewand (1) einer mit Deckel (2) und mit Abdichtungen (3,7) versehenen Wanne (4), ein im wesentlichen zylinderförmiges Führungselement (11) montiert ist, welches eine Befestigungsvorrichtung (12) für das Prüfobjekt (14) aufweist, daß um das mit einer entsprechend geformten Ausnehmung (13) zur lateralen Aufnahme des Prüfobjektes (14) versehene Führungselement (11) ein Rad (15) mit einer entsprechenden Ausnehmung (16) drehbar geführt ist, daß weiterhin am Rad (15) eine ebefalls zur lateralen Prüfobjektaufnahme geeignete Halterung (17) für ein oder mehrere justierbare Prüfköpfe (18) befestigt ist, daß das Rad (15) zum Antrieb mit einem Hauptantriebsrad (22) verbunden ist, daß das Hauptantriebsrad (22) über eine entsprechend gelagerte, axial verschiebbare Achse (23) mit einem Antriebselement (24) gekoppelt ist, daß ferner auf der Achse (23) ein Verstellelement (26) zur axialen Verstellung der Halterung (17) angeordnet ist, und daß zwei gegenüberliegende Wände der Wanne (4) mit entsprechenden Ausnehmungen (28) für das Prüfobjekt versehen sind.

2. Vorrichtung nach Anspruch 1,
dadurch gekennzeichnet,
daß aus der dem Prüfobjekt (14) zugewandten Fläche der Halterung (17), aus den entsprechenden Flächen des Führungselements (11) und aus einer Begrenzungswand (30) eine abdeckbare Kammer' (31) für das Ankopplungsmedium (8) gebildet ist, und daß die Kammer (31) mit einer Koppelmittelzuführung (29) über einen im Führungselement (11) enthaltenen Kanal (30) in Verbindung steht.

3. Vorrichtung nach Anspruch 1 und 2,
dadurch gekennzeichnet,
daß das Führungselement (11) außerhalb der Wanne (4) an der Montagewand (1) befestigt ist.

4. Vorrichtung nach Anspruch 1 bis 3,
dadurch gekennzeichnet,
daß die Befestigungseinrichtung (12) am Führungselement (11) als Adapter für Prüfobjekte (14) mit unterschiedlichen Durchmessern bzw. Geometrien ausgebildet ist, wobei der Adapter aus einer konischen Ausnehmung (33) im Führungselement (11) besteht, in die lösbare Backen (34) eingreifen, die über eine geschlitzte Druckscheibe (35) mittels geschlitzter Spannmutter (36) spannbar sind.

5. Vorrichtung nach Anspruch 1 bis 4,
dadurch gekennzeichnet,
daß das Rad (15) mit dem Hauptantriebsrad (22) über zwei Zwischenräder (21), deren Achsabstand den Umlauf des Rades (15) gewährleistet, verbunden ist.

6. Vorrichtung nach Anspruch 1 bis 5,
dadurch gekennzeichnet,
daß die zwei Zwischenräder (21), welche mit einem Umfang des Rades (15) umfassenden Bund versehen sind, das Verstellelement bilden.

7. Vorrichtung nach Anspruch 1 bis 6,
dadurch gekennzeichnet,
daß die Achsen der Zwischenräder (21) am Verstellelement (26) befestigt sind.

8. Vorrichtung nach Anspruch 1 bis 7,
dadurch gekennzeichnet,
daß der bzw. die Prüfköpfe (18) zu einem Modul (37) zusammengefaßt sind, der direkt am Rad (15) auswechselbar befestigt ist, wobei der Modul (37) an Modul-Führungen (38), die sich am Führungselement (11) befinden, geführt ist.

9. Vorrichtung nach Anspruch 1 bis 8,
dadurch gekennzeichnet,
daß den Prüfköpfen (18) justierbare akustische Reflektoren (19) zugeordnet sind.

10. Vorrichtung nach Anspruch 1 bis 9,
dadurch gekennzeichnet,
daß der Modul (37) und das Rad (15) eine auswechselbare Einheit bilden.

11. Vorrichtung nach Anspruch 1 bis 10,
dadurch gekennzeichnet,
daß der Modul (37) in das Rad (15) integriert ist.

12. Vorrichtung nach Anspruch 1 bis 11,
dadurch gekennzeichnet,
daß das Rad (15), die zwei Zwischenräder (21) und das Hauptantriebsrad (22) als Zahnräder ausgebildet sind.

Fig. I

EP 0 334 053 A2

Fig. II

Fig.III